# EUROPEAN PATENT APPLICATION

(11) **EP 4 687 324 A1**
(43) Date of publication of application: **04.02.2026**
(21) Application number: 24223181.9
(22) Date of filing: 24.12.2024
(51) Int. Cl.: H04L 9/40, H04L 67/00, H04N 1/00, G06F 3/12, G06F 21/60, H04L 67/52

(54) **INFORMATION PROCESSING SYSTEM, PROGRAM, AND INFORMATION PROCESSING METHOD**

(30) Priority: 29.07.2024 JP 2024122610
(71) Applicant: FUJIFILM Business Innovation Corp., Minato-ku Tokyo (JP)
(72) Inventor: KOMATSU, Takashi, Yokohama-shi, Kanagawa (JP)
(74) Representative: Kurig, Thomas

(57) **Abstract**

An information processing system includes a processor and a memory, in which the processor is configured to: in a case where a terminal transmits a request to execute a job to a device that the terminal is attachable to and detachable from, in a state in which the terminal is attached to the device and the device and the terminal are connected to each other, control the terminal such that the terminal requests the device to execute the job indicating that communication is performed using first network setting information set in the device; and, in a state in which the terminal is detached from the device and the device and the terminal are disconnected from each other, control the terminal on the basis of the job such that the terminal requests the device to execute the job indicating that communication is performed using second network setting information that is stored in the memory, is different from the first network setting information, and includes network settings related to communication corresponding to a security level of each of plural networks having different security levels.

## Description

### BACKGROUND OF THE INVENTION

### (i) Field of the Invention

The present disclosure relates to an information processing system, a program, and an information processing method.

### (ii) Description of Related Art

A technique is known in which, in a case where a terminal transmits a request to a device that can be connected to a plurality of networks, the terminal is connected to an appropriate network among the plurality of networks (for example, see JP2016-167803A). In this technique, an information processing device that transmits a request for a process to a device, which can be connected to a plurality of networks, via any of the plurality of networks determines whether or not to transmit the request for a process to the device via a first network on the basis of identification information of a user and communication information of the plurality of networks. In a case where the information processing device determines to transmit the request for a process to the device via the first network, the information processing device that performs communication via a third network different from the first network switches the network from the third network to the first network and performs communication to transmit the request for a process to the device.

In addition, a technique for providing a network-compatible image processing device that can achieve remote editing of an operation screen and the like is known (for example, see JP2009-130493A). In this technique, the network-compatible image processing device includes an image processing function, a Web server function of providing a Web service to another terminal via a network, and an operation screen display unit that displays an operation screen for a local user to operate the device, an operation screen editing unit that adds, edits, or updates the content of the operation screen for the Web service provided by the Web server function or the operation screen displayed by the operation screen display unit, a request interpretation unit that interprets a request received from another terminal and outputs screen editing information included in the received request to the operation screen editing unit in a case where the received request indicates an instruction to add, edit, or update the operation screen, and a response unit that generates response information corresponding to the received request interpreted by the request interpretation unit and responds to a transmission source of the request.

Further, a technique is known which executes data transmission while protecting security via a network (for example, see JP2008-90731A). In this technique, an information processing device is connected to a network and performs data communication with an external device. The information processing device includes a security setting management unit that stores security settings for secure data communication and a communication data attribute in association with each other, a communication data attribute determination unit that determines the communication data attribute (an index of confidentiality or importance of data) from communication data with the external device, and an application execution unit that determines the security settings of the secure data communication with the external device corresponding to the communication data attribute and executes communication with an appropriate security strength.

### SUMMARY OF THE INVENTION

However, in some cases, a device, such as a multifunction machine, has a communication function of performing communication using a network and includes a terminal, such as a tablet, attachable thereto and detachable therefrom. In a state in which the terminal is attached to the device, the device and the terminal are connected to each other, and it is possible to operate the device with the terminal using communication between the device and the terminal. On the other hand, in a state in which the terminal is detached from the device, the device and the terminal are disconnected from each other, and it is possible to operate the device with the terminal using communication between the device and the terminal via the network. In order to improve security for the terminal attached to the device, encrypted communication is applied, or security, such as concealment of a connection destination by an encrypted domain name system (DNS), is applied.

However, in a case where the terminal is detached from the device to operate the device, independent communication paths are established for communication of information related to the operation between the device and the terminal and communication of information between the device and a device other than the terminal. Therefore, in a case where communication is performed according to the set network settings of the terminal, communication may not be performed via a communication path corresponding to the network settings considering the security set in the device. On the other hand, in a case where the terminal is attached to the device to operate the device and the network setting information set in the device is different from the network setting information set in the terminal, communication may be performed via different communication paths, resulting in discrepancies. In addition, in a case where communication is always performed while maintaining security, phenomena, such as server access with a large processing load and access via an external encrypted DNS server, occur, and responsiveness of communication is reduced in the terminal. Therefore, in a case where the terminal is attached to and detached from the device to operate the device, there is room for improving the responsiveness of communication between the terminal and the device while maintaining security.

An object of the present invention is to provide an information processing system, a program, and an information processing method that can improve responsiveness of communication and security, as compared to a case in which communication is performed by network setting information set in a terminal.

The present disclosure includes the following aspects.

According to a first aspect of the present disclosure, there is provided an information processing system including a processor and a memory. The processor is configured to, in a case where a terminal transmits a request to execute a job to a device that the terminal is attachable to and detachable from, in a state in which the terminal is attached to the device and the device and the terminal are connected to each other, control the terminal such that the terminal requests the device to execute the job indicating that communication is performed using first network setting information set in the device; and in a state in which the terminal is detached from the device and the device and the terminal are disconnected from each other, control the terminal on a basis of the job such that the terminal requests the device to execute the job indicating that communication is performed using second network setting information that is stored in the memory, is different from the first network setting information, and includes network settings related to communication corresponding to a security level of each of a plurality of networks having different security levels.

According to a second aspect of the present disclosure, in the information processing system according to the first aspect, the processor may be configured to set, as the second network setting information, network setting information corresponding to a security level of a communication path in a case where communication is performed by the execution of the job.

According to a third aspect of the present disclosure, in the information processing system according to the second aspect, the processor may be configured to set, as the second network setting information, network setting information including network settings corresponding to a security level related to a communication path to a communication destination on a basis of information indicating the communication path to the communication destination in the job.

According to a fourth aspect of the present disclosure, in the information processing system according to the third aspect, the processor may be configured to in a case where a security level of the information indicating the communication path to the communication destination is lower than a predetermined security level, set information indicating that a predetermined encryption process is performed for communication as the second network setting information.

According to a fifth aspect of the present disclosure, in the information processing system according to any one of the first to fourth aspects, position information indicating a position of a predetermined device on a network is stored in the memory in advance, and the processor may be configured to determine whether a state between the device and the terminal is the connected state or the disconnected state on a basis of a communication result in a case where communication is performed using the position information.

According to a sixth aspect of the present disclosure, in the information processing system according to the fifth aspect, the processor may be configured to store the position information in the memory in a case where the terminal is detached from the device.

According to a seventh aspect of the present disclosure, in the information processing system according to the sixth aspect, the processor may be configured to store, in the memory, position information (IP) indicating a position of the device on the network, which has been acquired from the device, in the connected state and determine whether the state between the device and the terminal is the connected state or the disconnected state on a basis of the stored position information.

According to an eighth aspect of the present disclosure, in the information processing system according to the seventh aspect, the processor may be configured to determine whether the state between the device and the terminal is the connected state or the disconnected state on a basis of a communication result of direct communication between the terminal and the device.

According to a ninth aspect of the present disclosure, in the information processing system of the eighth aspect, the processor may be configured to determine that the state is the connected state in a case where the direct communication is successful; and determine that the state is the disconnected state in a case where the direct communication is unsuccessful.

According to a tenth aspect of the present disclosure, there is provided a program that causes a processor to execute information processing,
the program causing the processor to execute a process including in a case where a terminal transmits a request to execute a job to a device that the terminal is attachable to and detachable from, in a state in which the terminal is attached to the device and the device and the terminal are connected to each other, controlling the terminal such that the terminal requests the device to execute the job indicating that communication is performed using first network setting information set in the device; and in a state in which the terminal is detached from the device and the device and the terminal are disconnected from each other, controlling the terminal on a basis of the job such that the terminal requests the device to execute the job indicating that communication is performed using second network setting information that is stored in a memory, is different from the first network setting information, and includes network settings related to communication corresponding to a security level of each of a plurality of networks having different security levels.

According to an eleventh aspect of the present disclosure, there is provided an information processing method, in a case where a terminal transmits a request to execute a job to a device that the terminal is attachable to and detachable from, in a state in which the terminal is attached to the device and the device and the terminal are connected to each other, controlling the terminal such that the terminal requests the device to execute the job indicating that communication is performed using first network setting information set in the device; and in a state in which the terminal is detached from the device and the device and the terminal are disconnected from each other, controlling the terminal on a basis of the job such that the terminal requests the device to execute the job indicating that communication is performed using second network setting information that is stored in a memory, is different from the first network setting information, and includes network settings related to communication corresponding to a security level of each of a plurality of networks having different security levels.

According to the first, tenth and eleventh aspects of the present disclosure, it is possible to improve a responsiveness of communication and a security compared to a case where communication is performed using network setting information set in a terminal.

According to the second aspect of the present disclosure, it is possible to improve the responsiveness of communication and the security for each job compared to a case where the security level in communication for executing a job is not taken into consideration.

According to the third and fourth aspects of the present disclosure, it is possible to improve the responsiveness of communication and the security compared to a case where the security level of the communication path to the communication destination in the job is not taken into consideration.

According to the fifth aspect of the present disclosure, it is possible to specify the connection state of a device that the terminal is attachable to and detachable from, compared to a case where communication is performed without taking into account the position of the device.

According to the sixth aspect of the present disclosure, it is possible to store position information fewer times compared to a case where position information is stored multiple times in a state where the terminal is attached to the device.

According to the seventh aspect of the present disclosure, a processing load related to the determination can be reduced compared to determining the states of the device and the terminal regardless of the location of the device on the network.

According to the eighth and ninth aspects of the present disclosure, the processing load relating to the determination can be reduced compared to a case where the determination is made without taking into account the type of communication between the terminal and the device.

### BRIEF DESCRIPTION OF THE DRAWINGS

Exemplary embodiment(s) of the present invention will be described in detail based on the following figures, wherein:
Fig. 1 is a block diagram showing an example of a configuration of a network system according to an exemplary embodiment;
Fig. 2 is a block diagram showing an example of a configuration of a device according to the exemplary embodiment;
Fig. 3 is a block diagram showing an example of a configuration of a tablet according to the exemplary embodiment;
Fig. 4 is a block diagram showing an example of a configuration of a normal DNS server according to the exemplary embodiment;
Fig. 5 is a diagram showing an example of a functional configuration of the tablet according to the exemplary embodiment;
Fig. 6 is a flowchart showing an example of a flow of a process of the tablet according to the exemplary embodiment;
Fig. 7 is a conceptual diagram showing a flow of information in a case where printing is designated from the tablet according to the exemplary embodiment;
Fig. 8 is a conceptual diagram showing a flow of information in a case where printing is designated from the tablet according to the exemplary embodiment;
Fig. 9 is a conceptual diagram showing a flow of information in a case where printing by an adjacent device is designated from the tablet according to the exemplary embodiment;
Fig. 10 is a conceptual diagram showing a flow of information in a case where a print instruction is issued in a state in which the tablet according to the exemplary embodiment is attached to the device;
Fig. 11 is a conceptual diagram showing a flow of information in a case where printing is designated in a state in which the tablet according to the exemplary embodiment is detached from the device and is located outside an internal area;
Fig. 12 is a diagram showing an example of a configuration of a network system according to an exemplary embodiment; and
Fig. 13 is a flowchart showing an example of a flow of a process of registering a user terminal according to the exemplary embodiment in the device.

### DETAILED DESCRIPTION OF THE INVENTION

Hereinafter, an example of an exemplary embodiment for implementing the technology of the present disclosure will be described in detail with reference to the drawings. In addition, components and processes having the same operations, actions, and functions are denoted by the same reference numerals throughout the drawings, and a redundant description thereof may be omitted as appropriate. Each drawing is merely schematically shown to the extent that the technology of the present disclosure can be fully understood. Therefore, the technology of the present disclosure is not limited to only the shown examples. Further, in the present exemplary embodiment, a description of configurations that are not directly related to the present invention and well-known configurations may be omitted.

In the present disclosure, the term "device" is a concept including a device that can execute a predetermined process such as a printing process. For example, the device includes a device and a multifunction machine that can execute at least one of an image printing process, an image reading process (scanning), or a communication process. In addition, in the present disclosure, the term "terminal" is a concept including a device that can independently execute various predetermined processes. For example, the terminal includes a user terminal such as a tablet. Further, a relationship between the device and the terminal includes a relationship in which the terminal can be attached to and detached from the device. An attachable and detachable state is a concept including a state of changing to any one of a state in which direct communication between the device and the terminal is possible or a state in which the direct communication is not possible. That is, a state in which the device and the terminal can directly communicate with each other using wired connection and wireless connection is an example of the attached state, and a state in which the direct communication is not possible is an example of the detached state.

### <First Exemplary Embodiment>

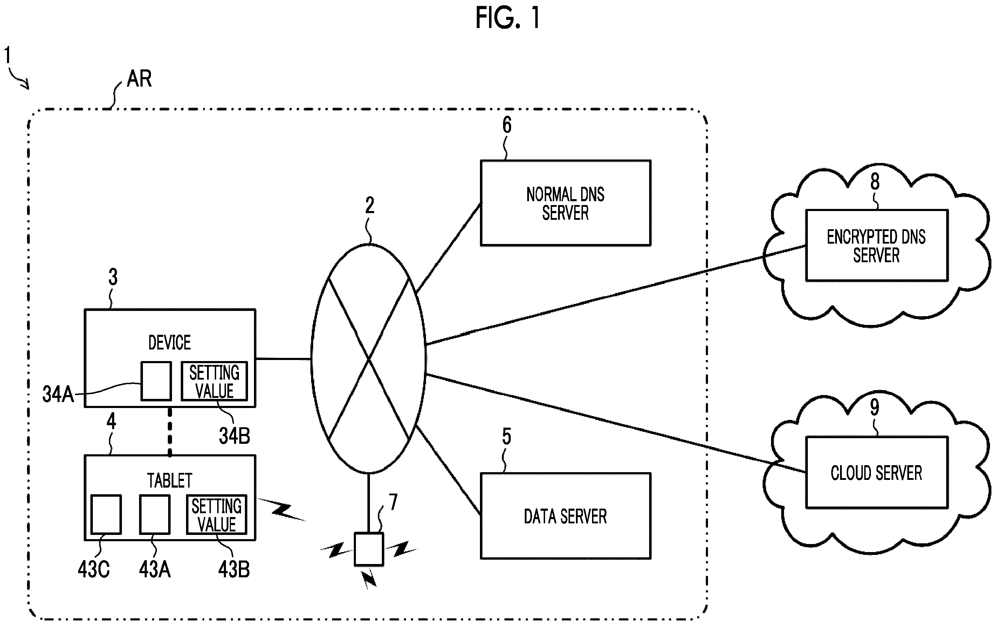

Fig. 1 shows an example of a configuration of a network system 1 according to the present exemplary embodiment. In the example shown in Fig. 1, an example of a system that executes the printing process is schematically shown.

The network system 1 includes a plurality of devices including an internal device that operates in an internal area AR, which is a management target region, in an organization, such as a company, that maintains a predetermined security level and an external device that operates outside the internal area AR.

Specifically, the network system 1 includes a device 3 in the internal area AR. The device 3 is connected to an internal network 2, is operated on the basis of network setting information related to a network environment, and performs transmission and reception of information to and from other devices and execution of a predetermined process. In the present exemplary embodiment, a case where a multifunction machine including a unique mechanism for implementing an image processing function is applied as the device 3 will be described. Examples of the image processing function include an image forming function including an image copy function of copying a document and an image printing function of printing data of an input document and an image reading function of reading (scanning) a document as an image and converting the image into data.

An access point 7 for enabling wireless communication, such as WiFi (registered trademark), is connected to the internal network 2.

The device 3 is configured such that a tablet 4 as a terminal can be attached thereto and detached therefrom. For example, the device 3 and the tablet 4 are attached to each other by direct connection, such as wired connection between the device 3 and the tablet 4 or connection between the device 3 and the tablet 4 by short-range wireless communication, and are detached from each other in a case where the direct connection is released. In Fig. 1, the attachable and detachable state is represented by a dotted line. The tablet 4 operates as a user interface (UI) panel that operates the device 3 in a state in which the tablet 4 is attached to the device 3. In addition, the tablet 4 can operate in the internal area AR and operate outside the internal area AR in a state in which the tablet 4 is detached from the device 3.

Further, the network system 1 includes a data server 5 and a normal domain name system (DNS) server 6 as internal servers that are installed in the internal area AR. The data server 5 is a server device that accumulates print data. The normal DNS server 6 is a server that performs a name resolution process. That is, the normal DNS server 6 is a server having at least a name resolution function, that is, a function of performing the name resolution process of obtaining an entity, such as an internet protocol address (IP address), from names including a name of an electronic device, such as a computer, and a domain name included in an email address. Further, the normal DNS server 6 transmits and receives data in plain text without encryption.

Furthermore, the network system 1 includes an encrypted DNS server 8 and a cloud server 9 as external servers that are installed outside the internal area AR. The encrypted DNS server 8 and the cloud server 9 are provided on a so-called cloud. The encrypted DNS server 8 is a server that executes a process of encrypting a DNS query, such as a request, and a response in order to enhance security. The cloud server 9 is a server device that accumulates print data or the like on the cloud. The encrypted DNS server 8 and the cloud server 9 are formed to be connected to the internal network 2 via a network, such as the Internet (not shown), such that the devices can communicate with each other.

In addition, the encrypted DNS server 8 may be a server that executes an encryption process, such as DNS over HTTPS (DoH), in HTTPS connection and name resolution from the viewpoint of maintaining security.

In addition, the devices included in the network system 1 are not limited to the above-described devices. For example, the network system 1 may be configured to include various servers, such as a dynamic host configuration protocol (DHCP) server and a mail server, as examples of other devices. The DHCP server is a server that has a function including a process of automatically assigning network setting information including an IP address used in a case where an electronic device, such as a computer, is connected to the network. The mail server is a server that has a function including a process of delivering electronic mail.

Each of the devices included in the network system 1 stores the network setting information used in network communication, such as an IP address in a network environment, in order to specify the device and to transmit and receive information.

### (Device 3)

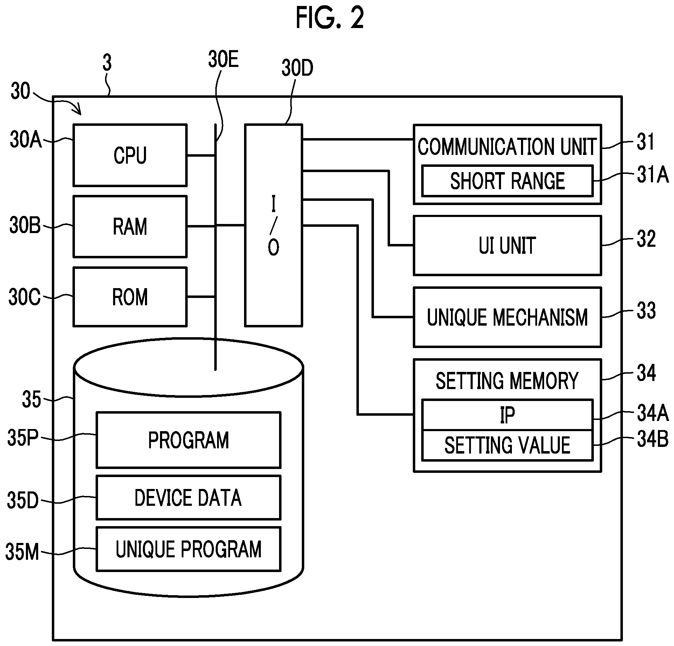

Next, an example of a configuration of the device 3 will be described with reference to Fig. 2. The device 3 is an electronic device, such as a computer, for performing various processes in the internal network 2.

The device 3 includes a computer main body 30, and the computer main body 30 includes a central processing unit (CPU) 30A. In addition, the computer main body 30 includes a random access memory (RAM) 30B, a read-only memory (ROM) 30C, and an input/output port (I/O) 30D. Further, the CPU 30A, the RAM 30B, the ROM 30C, and the I/O 30D are connected to each other via a bus 30E. An auxiliary storage device 35 that can be implemented by a hard disk drive (HDD), a non-volatile flash memory, or the like is connected to the bus 30E. A communication unit 31, a UI unit 32, such as a touch panel, that can display an image, and a unique mechanism 33 are connected to the I/O 30D.

The communication unit 31 is a portion that executes communication between the device 3 and another device, includes a mechanism for performing communication with at least the internal network 2, and includes a short-range communication unit 31A that performs communication with the tablet 4. The short-range communication unit 31A includes a mechanism for wired connection, such as Universal Serial Bus (USB; registered trademark) connection, and short-range wireless connection, such as Bluetooth (registered trademark), for connection to the tablet 4.

In the present exemplary embodiment, the tablet 4 is applied as the UI unit 32 and operates as the UIunit 32 in a state in which the tablet 4 is attached to the device 3. In addition, the device 3 may be formed to include the UI unit 32 independently of the tablet 4 and to be attachable to and detachable from the tablet 4.

The unique mechanism 33 is, for example, a mechanism for implementing the image processing functions. For example, the unique mechanism 33 is various mechanisms for implementing the image processing functions such as the above-described copying, printing, and scanning. Since these various mechanisms are known technologies, a detailed description thereof will be omitted.

The auxiliary storage device 35 stores a unique program 35P for causing the device 3 to function as a unique device. The CPU 30A reads out the unique program 35P from the auxiliary storage device 35 and deploys the unique program 35P in the RAM 30B to execute a process. Then, the device 3 that has executed the unique program 35P operates as a unique device. In addition, various types of device data 35D used in the device 3 are stored in the auxiliary storage device 35.

Further, the device 3 has a function of connecting to an external network, such as the Internet, under the management of the device in the internal area AR. For example, the device 3 includes a network connection device (not shown) that controls the connection between the internal network 2 and the external network and can perform data communication between the internal network 2 and the external network via the network connection device (not shown). In this case, the device 3 can have a communication control function of a known router, a known gateway, and the like that control data communication and function as a default gateway in the internal area AR.

In addition, the device 3 includes a setting memory 34, and the setting memory 34 is connected to the I/O 30D. The setting memory 34 is a memory that stores various types of information for performing communication in the network environment. That is, the setting memory 34 stores network setting information such as proxy settings and DNS settings. In the present exemplary embodiment, the setting memory 34 is provided with an IP region 34A and a setting value region 34B and stores the network setting information including at least an IP address and a setting value. An IP address, which is information indicating the position of the device 3 on the internal network, is stored in the IP region 34A, and information used to communication with servers, such as the normal DNS server 6, the data server 5, and the DHCP server, is stored in the setting value region 34B. In addition, the setting memory 34 is not limited to being formed as an independent memory, and a setting memory region may be provided in the auxiliary storage device 35 to store the network setting information.

### (Tablet 4)

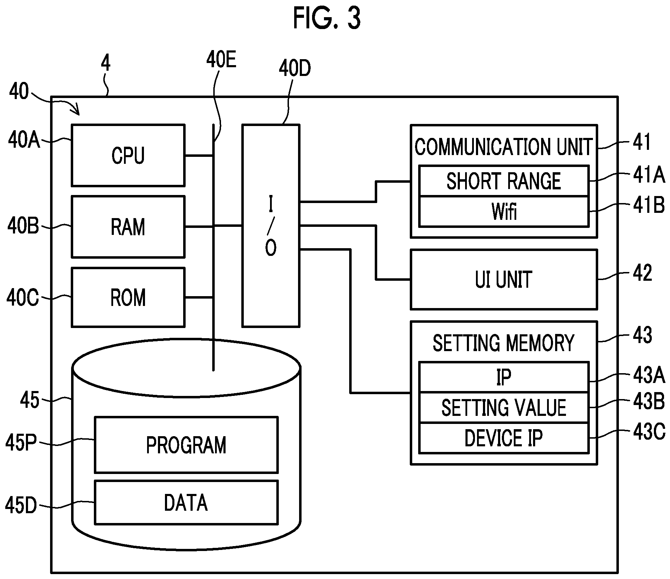

Next, an example of a configuration of the tablet 4 will be described with reference to Fig. 3.

The tablet 4 includes a computer main body 40, and the computer main body 40 includes a CPU 40A, a RAM 40B, a ROM 40C, and an I/O 40D which are connected to each other via a bus 40E. An auxiliary storage device 45 is connected to the bus 40E. In addition, a communication unit 41 that communicates with the device 3 and other devices and a UI unit 42 for operating the tablet 4 are connected to the I/O 40D. Further, a setting memory 43 is connected to the I/O 40D.

The communication unit 41 is a portion that executes communication with other devices including the device 3, includes a mechanism for performing communication with at least the internal network 2, and includes a short-range communication unit 41A that performs communication with the device 3. The short-range communication unit 41A includes a mechanism for wired connection, such as USB (registered trademark) connection, and short-range wireless connection, such as Bluetooth (registered trademark), for connection to the device 3.

The UI unit 42 is a portion that includes an operation input unit, such as a touch panel, and acquires or displays information input by an operation on the tablet 4.

The auxiliary storage device 45 stores a program 45P for causing the tablet 4 to function as a terminal. The CPU 40A reads out the program 45P for a terminal from the auxiliary storage device 45 and deploys the program 45P in the RAM 40B to execute a process. Therefore, the tablet 4 that has executed the program 45P operates as a terminal. In addition, various types of data 45D used in the tablet 4 are stored in the auxiliary storage device 45.

The setting memory 43 of the tablet 4 is a memory that stores various types of information for the tablet 4 to perform communication in the network environment. The setting memory 43 is provided with an IP region 43A and a setting value region 43B and stores network setting information including at least an IP address unique to the tablet 4 and setting values. Information for identifying the tablet 4 on the internal network, that is, information indicating the position of the tablet 4 on the internal network is stored in the IP region 43A. In addition, the setting value region 43B stores information used to communicate with servers such as the normal DNS server 6, the data server 5, and the DHCP server. Further, the setting memory 43 includes a device IP region 43C for storing the IP address of the device 3 to which the tablet 4 is attached. Furthermore, the setting memory 43 is not limited to being formed as an independent memory, and a setting memory region may be provided in the auxiliary storage device 45 to store the network setting information.

### (Normal DNS Server 6)

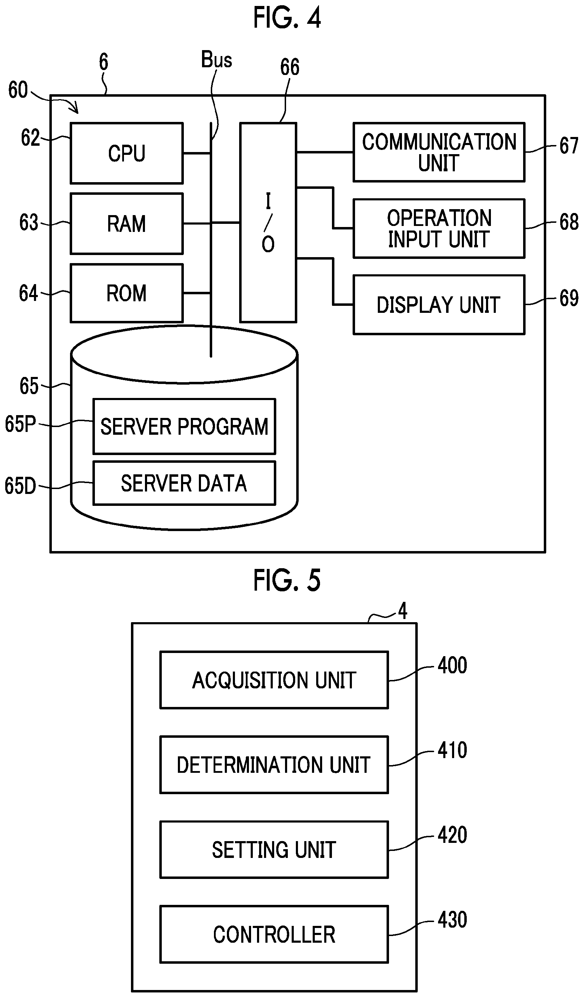

Next, an example of a configuration of the normal DNS server 6 will be described with reference to Fig. 4.

The normal DNS server 6 includes a computer main body 60, and the computer main body 60 includes a CPU 62, a RAM 63, a ROM 64, and an I/O 66 which are connected to each other via a bus Bus. An auxiliary storage device 65 is connected to the bus Bus. In addition, a communication unit 67 that performs network communication, an operation input unit 68 that inputs an operation for the normal DNS server 6, and a display unit 69 that displays information are connected to the I/O 66.

The auxiliary storage device 65 stores a server program 65P and various types of server data 65D used in the normal DNS server 6. The CPU 62 reads out the server program 65P from the auxiliary storage device 65 and deploys the server program 65P in the RAM 63 to execute a process. Therefore, the normal DNS server 6 that has executed the server program 65P operates as a DNS server.

In addition, since other servers including the data server 5 have the same configuration as the normal DNS server 6, a detailed description thereof will be omitted.

The tablet 4 is an example of a terminal according to the exemplary embodiment of the present disclosure. In addition, the device 3 is an example of a device according to the exemplary embodiment of the present disclosure.

However, in some cases, the device 3, such as a multifunction machine, is connected to the network to communicate with the cloud server 9. Therefore, the network function is also provided with a mechanism for implementing wired and wireless connection, and encrypted communication and DNS encryption for concealing a connection destination are also introduced as security requirements. However, there is a case where communication from the tablet 4 detached from the device 3 does not pass through an appropriate communication path. For example, in a case where setting omission occurs in the tablet even though the network setting information for maintaining security is set in the device 3, the communication does not follow a security path for maintaining the security in the device 3. In addition, responsiveness is reduced in a case where an independent process of the device 3, such as access to an unnecessary server following the security path, is executed and communication is performed via a server with a large processing load, such as an encrypted DNS server that performs encryption.

Therefore, in the present exemplary embodiment, in a case where the tablet 4 is mainly detached from the device 3 to remotely operate the device 3, it is possible to improve the responsiveness of communication while maintaining the security set in the device. The network system 1 according to the present exemplary embodiment improves the responsiveness of communication while maintaining security in any of a (connected) state in which the tablet 4 is attached to the device 3 or a (disconnected) state in which the tablet 4 is detached from the device 3 in the communication of the tablet 4. In this case, in the tablet 4, the communication path is determined depending on the designated communication destination (for example, a URL). Specifically, the tablet 4 determines the designated communication destination (for example, a URL), automatically determines the designated communication destination even in wireless communication, such as WiFi (registered trademark), and other connections using the DNS and proxy set in the device 3, and sets connection for improving the responsiveness of communication while maintaining security.

Here, a functional configuration related to the operation of the tablet 4 will be described.

Fig. 5 is a diagram showing an example of a configuration in which electric configurations obtained by the execution of the program by the CPU 40A in the tablet 4 according to the present exemplary embodiment are functionally classified.

The tablet 4 includes an acquisition unit 400, a determination unit 410, a setting unit 420, and a controller 430. The CPU 40A of the tablet 4 executes the program 45P such that the tablet 4 operates as the acquisition unit 400, the determination unit 410, the setting unit 420, and the controller 430.

The acquisition unit 400 is a portion that acquires information indicating a request to execute a job. For example, the acquisition unit 400 acquires a file from the data server 5 and acquires information indicating an instruction for the device 3 to perform printing. The determination unit 410 determines whether the tablet 4 is attached to or detached from the device 3. The setting unit 420 determines a communication path according to any one of the attached state or the detached state of the tablet 4. The controller 430 performs control to instruct the device 3 to execute the job via the communication path set by the setting unit 420.

Next, the operation of the network system 1 according to the present exemplary embodiment will be described with a focus on information processing executed by the tablet 4.

In the present exemplary embodiment, in the network system 1, the tablet 4 directly communicates with the device 3 using wired connection, such as cable connection, and wireless connection, such as short-range communication, in a case where the tablet 4 is connected to the device 3. In addition, the tablet 4 performs wireless network communication using the network settings of the tablet 4 in a case where the tablet 4 is detached from the device 3. In a case where the tablet 4 is detached from the device 3, the tablet 4 operates as a remote UI of the device 3 and is wirelessly connected to the device 3 by hypertext transfer protocol (HTTP) or the like. In addition, hypertext transfer protocol secure (HTTPS) may be used as the protocol. In a case where the tablet 4 is located in the internal area AR, a local DNS in the internal area AR, that is, the normal DNS server is preferentially used to perform name resolution. On the other hand, in a case where the tablet 4 is not used to remotely operate the device 3, but is used, for example, to be connected to a server outside the internal area AR and to refer to data using a normal browser, DNS encryption is prioritized.

For example, in a case where the user goes out while holding the tablet 4 in a state in which the tablet 4 is detached from the device 3 and the tablet 4 is in the disconnected state because the tablet 4 is not capable of being connected to the device 3, a communication path accompanied by the DNS encryption is prioritized.

In addition, the connection for direct communication between the device 3 and the tablet 4 is not limited to communication using the wired connection, such as cable connection, and the wireless connection, such as short-range communication, as communication in which the device 3 and the tablet 4 can be connected to each other. For example, the communication may be performed via a device that relays the communication between the device 3 and the tablet 4.

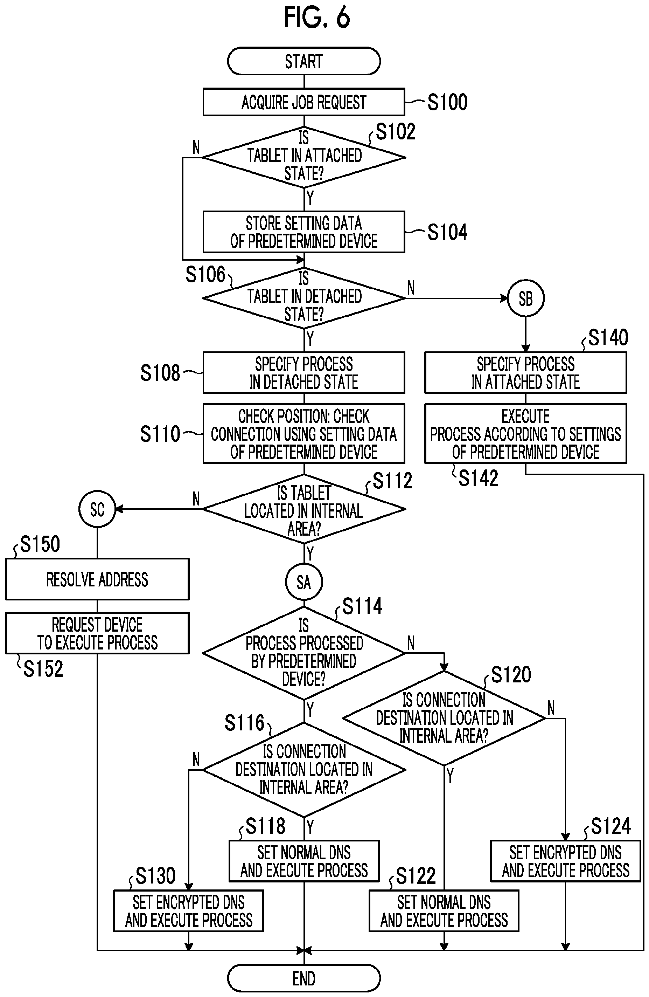

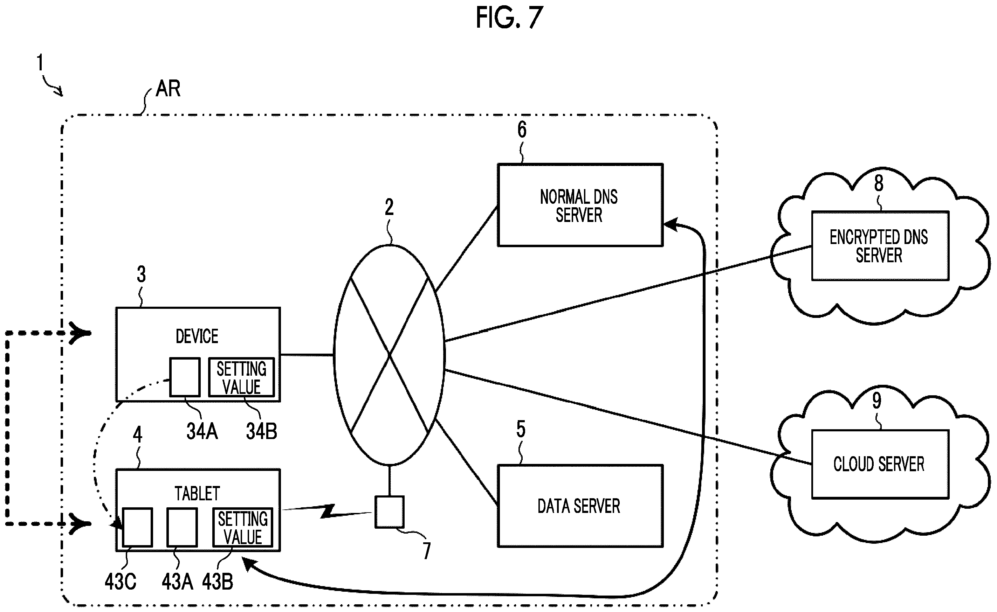

Fig. 6 is a flowchart showing an example of a flow of a process by the program 45P of the tablet 4. Figs. 7 to 11 are conceptual diagrams showing an example of a flow of information between the devices in the network system 1.

Specifically, in the tablet 4, the CPU 40A executes each of the following steps in response to a start-up instruction from the program 45P.

In the acquisition unit 400, the CPU 40A acquires information indicating a request to execute a job in Step S100 of Fig. 6. Here, information indicating an instruction to acquire a file from the data server 5 and to print the file with the device 3 is acquired as the information indicating the request to execute a job.

Then, in Step S102, in the determination unit 410, the CPU 40A determines whether or not the tablet 4 is attached to the device 3. Specifically, the CPU 40A determines whether the connection is the wired connection or the short-range wireless connection. In a case where the tablet 4 is not attached to the device 3 and is detached from the device 3, the determination result in Step S102 is "No", and the CPU 40A advances the process to Step S106. On the other hand, in a case where the tablet 4 is attached to the device 3, the determination result in Step S102 is "Yes", and the CPU 40A stores the setting data of the device 3, which is a predetermined device, in Step S104. Specifically, the IP address of the device 3 is copied to the tablet 4. That is, the IP address indicating the position of the device 3 on the network, which is stored in the IP region 34A of the device 3, is acquired and stored as the IP address of the device 3, to which the tablet 4 is attached, in the device IP region 43C of the tablet 4.

Further, the storage of the IP address of the device 3 in the tablet 4 may be executed in a case where or immediately before the tablet 4 is detached from the device 3.

Then, in Step S106, in the determination unit 410, the CPU 40A determines whether or not the tablet 4 is in the detached state in which the tablet 4 is detached from the device 3 as in Step S102. In a case where the tablet 4 is in the detached state, the determination result in Step S106 is "Yes", and the CPU 40A advances the process to Step S108 to execute a process corresponding to the detached state of the tablet 4. On the other hand, in a case where the tablet 4 is not in the detached state (that is, is in the attached state), a process in a case where the tablet 4 is attached to the device 3 as a tablet state SB in the network system 1 is executed (which will be described in detail below). The determination result in Step S106 is "No", and the CPU 40A advances the process to Step S140 to execute a process corresponding to the attached state of the tablet 4.

In Step S108, in the determination unit 410, the CPU 40A specifies a process in the detached state of the tablet 4. The specification of the process includes specification of a device that executes the job and specification of a communication path in a case where the job is executed.

Then, in Step S110, in the determination unit 410, the CPU 40A executes connection check with the setting data of the predetermined device which is the device 3 to which the tablet 4 is attached. That is, the connection check is executed using the IP address of the device 3 stored in the device IP region 43C of the tablet 4.

Then, in Step S112, in the determination unit 410, the CPU 40A determines whether the tablet 4 is located in the internal area AR on the basis of the check result in Step S110. Specifically, the tablet 4 is located in the internal area AR in a case where the connection check of the IP address of the device 3 stored in the tablet 4 is successful. On the other hand, in a case where the connection check fails, the tablet 4 is not located in the internal area AR and is located, for example, outside the internal area AR.

In a case where the determination result in Step S 112 is "Yes", a process in a case where the tablet 4 is detached from the device and is located in the internal area AR as a tablet state SA in the network system 1 is executed. On the other hand, in a case where the determination result in Step S112 is "No", a process in a case where the tablet 4 is detached from the device and is located outside the internal area AR as a tablet state SC in the network system 1 is executed (which will be described in detail below).

Then, in Step S114, in the determination unit 410, the CPU 40A determines whether or not the process specified in Step S108, that is, the execution of the job is processed by the predetermined device.

In a case where the determination result in Step S114 is "Yes", the CPU 40A advances the process to Step S116. In Step S116, in the determination unit 410, the CPU 40A determines whether or not a server, which is a connection destination for job execution, is in the internal area AR.

Then, in Step S118, the CPU 40A sets a communication path in the setting unit 420, instructs the device 3, which is the predetermined device, to execute the job in the controller 430, and ends the present processing routine.

Fig. 7 is a conceptual diagram showing a flow of information in a case where the printing of the data accumulated in the data server 5 is designated from the tablet 4.

Here, a case where the tablet 4 that can be attached to and detached from the device 3 connected to the network in the internal area AR is detached and used in the internal area AR is assumed. The device 3 connected to the network in the internal area AR has a region (setting memory 34) for storing network settings for DNS communication on the device side. The network settings include the IP address of the device 3, an FQDN name, and the names, addresses, and domain names of the encrypted DNS server, the normal DNS server, and the like. In addition, the tablet 4 has a wireless connection function using WiFi (registered trademark). In a case where the tablet 4 is detached from the device 3, the IP address unique to the tablet 4 is acquired from a DHCP server or the like and is then used. Further, the tablet 4 has a region (setting memory 43) for storing the settings of the encrypted DNS server and the normal DNS server used in a case where the tablet 4 is detached.

Furthermore, it is assumed that the following information is set.
Device 3: (IP address) 192.168.0.10
Device 3: (domain) MF1.CORP.INTERNAL
Tablet 4: (IP address) 192.168.128.1
Tablet 4: (domain) MF1-UI.CORP.INTERNAL
Data server 5: (IP address) 192.168.64.100
Data server 5: (domain) NAS.CORP.INTERNAL
Print file: ¥¥NAS.CORP.INTERNAL¥BROCHURE001
Normal DNS server 6: (IP address) 192.168.0.1
Normal DNS server 6: (domain) CORP.INTERNAL

In a case where the printing of the data accumulated in the data server 5 is designated from the tablet 4, the connection destination is determined to be the server in the internal area AR from the domain or the private IP address, and the settings of the tablet 4 are to perform name resolution using the normal DNS.

Specifically, as represented by a two-dot chain line in Fig. 7, in the attached state before the tablet 4 is detached from the device 3, the IP address (192.168.0.10) of the device 3 is stored in the device IP region 43C (S104). The user selects a file to be printed from the data in the data server 5 in a state in which the tablet 4 is detached from the device 3, inputs the file as "¥¥NAS.CORP.INTERNAL¥BROCHURE001", and designates the printing of one copy. In addition, the user also designates the device 3 that executes printing (IP address: 192.168.0.10). The tablet 4 acquires the designated information (S100). The tablet 4 performs connection check for the IP address of the device 3 and determines whether or not the device 3 is located in the internal area AR (S112). Then, as represented by a dotted line in Fig. 7, in a case where the connection check for the device 3 is successful, the tablet 4 determines that the connection destination is located in the internal area AR (Yes in S116). Then, as represented by a solid line in Fig. 7, the network information of the tablet is set to use the normal DNS server 6, and address resolution is performed (S118). After the address resolution, the tablet 4 instructs the device 3, which is the predetermined device and whose address is 192.168.0.10, to acquire and print the print file using the network communication.

In the above, the determination is made using the IP address. However, the determination may be made using the domain. For example, the domain MF1-UI.CORP.INTERNAL of the tablet 4 and the domain NAS.CORP.INTERNAL of the data server 5 designated as the print file may be compared with each other. Since the domains are matched with each other, it may be determined that the domains are local domains. The network information of the tablet 4 may be set to use the normal DNS server 6, and address resolution may be performed.

Next, an instruction to designate a print file in the cloud server 9 outside the internal area AR and to print the print file with the device 3 will be described.

In Step S100 shown in Fig. 6, in a case in which an instruction to designate the print file in the cloud server 9 and to print the print file with the device 3 is acquired as a job request, the determination result in Step S116 is "No", and the CPU 40A advances the process to Step S130.

In Step S130, the CPU 40A sets a communication path using the encrypted DNS server 8 in the setting unit 420, instructs the device 3, which is the predetermined device, to execute the job in the controller 430, and ends the present processing routine.

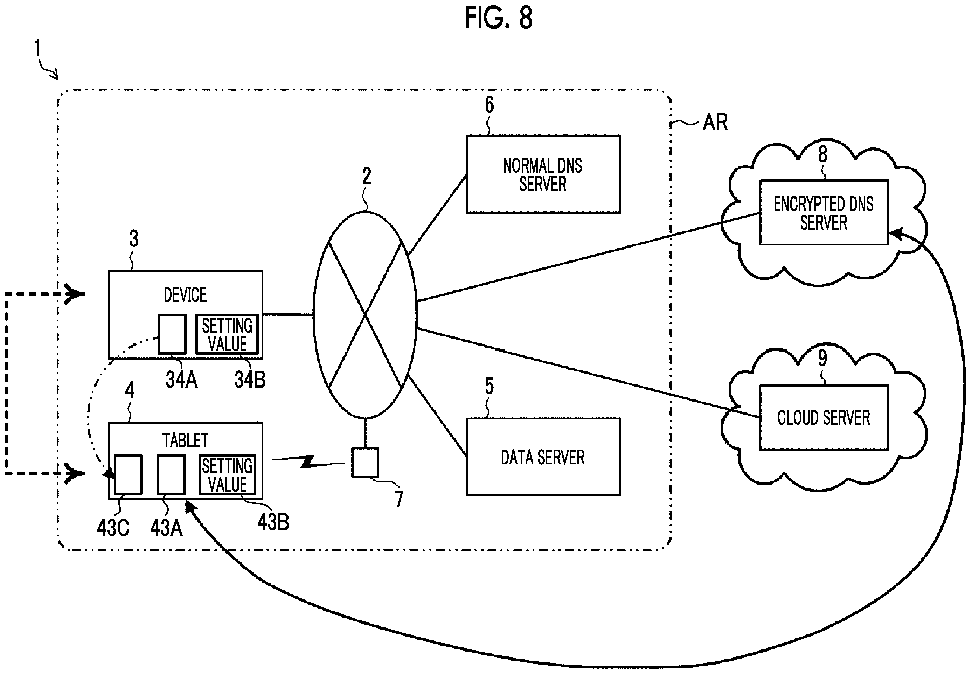

Fig. 8 is a conceptual diagram showing a flow of information in a case where the printing of the data accumulated in the cloud server 9 is designated from the tablet 4.

Here, it is assumed that the following information is set.
Cloud server 9: (domain) FILES.CONTOSO.COM
Print file: ¥¥FILES.CONTOSO.COM¥CATALOG100
Encrypted DNS server 8: (IP address) xxx.xxx.xxx.xxx<global IP address>
Encrypted DNS server 8: (domain) ANGO.COM

In a case where a service, such as a cloud printing service, is applied to designate the printing of the data accumulated in the cloud server 9 by the tablet 4, it is determined that the connection destination is a cloud and is not the server in the internal area AR from the domain or global IP address of the cloud server 9 which is the connection destination, and the tablet 4 is set to perform name resolution using the encrypted DNS.

Specifically, the user selects a file "¥¥FILES.CONTOSO.COM¥CATALOG100" from the data in the cloud server 9 and designates the printing of one copy. In addition, the user also designates the device 3 that executes the printing. The tablet 4 acquires the designated information (S100). Since the server to be used is a cloud server outside the internal area AR (No in S116), the network information of the tablet is set to use the encrypted DNS server 8 as represented by a solid line in Fig. 8, and address resolution is performed (S130). After the address resolution, the tablet 4 instructs the device 3, which is the predetermined device, to acquire and print the print file using network communication.

In addition, in a case where site information of the World Wide Web (Web) outside the internal area AR is displayed by the tablet 4 and the displayed content is printed, network information may be set in the same manner as described above. That is, the connection destination of the tablet 4 is the cloud server outside the internal area AR. Therefore, the network settings of the tablet 4 are to use the encrypted DNS server 8. In addition, the print data may be printed using separate connection. For connection for issuing a print instruction from the tablet 4 to the device 3, the IP address may be directly designated, or settings using the normal DNS server 6 may be included in the network settings of the tablet 4.

Next, an instruction to perform printing with a device other than the predetermined device, such as an adjacent device, will be described. Here, a case where an instruction to print the data accumulated in the device 3 with a device 3-1 adjacent to the device 3 is executed will be described.

In a case in which an instruction to perform printing with a different device adjacent to the device 3, which is the predetermined device, is acquired as the job request in Step S100 shown in Fig. 6, the determination result in Step S114 is "No", and the CPU 40A advances the process to Step S120.

Since the determination result of the CPU 40Ain Step S114 is "No", in Step S120, in the determination unit 410, the CPU 40A determines whether or not the server, which is the connection destination for job execution, is in the internal area AR as in Step S116. In a case where the server is in the internal area AR, the determination result in Step S120 is "Yes". In Step S122, the CPU 40A sets a communication path in the setting unit 420, instructs the device 3, which is the predetermined device, to execute the job in the controller 430, and ends the present processing routine as in Step S118. On the other hand, in a case where the server is not in the internal area AR, the CPU 40A sets a communication path using the encrypted DNS server 8 in the setting unit 420, instructs the device 3, which is the predetermined device, to execute the job in the controller 430, and ends the present processing routine as in Step S130.

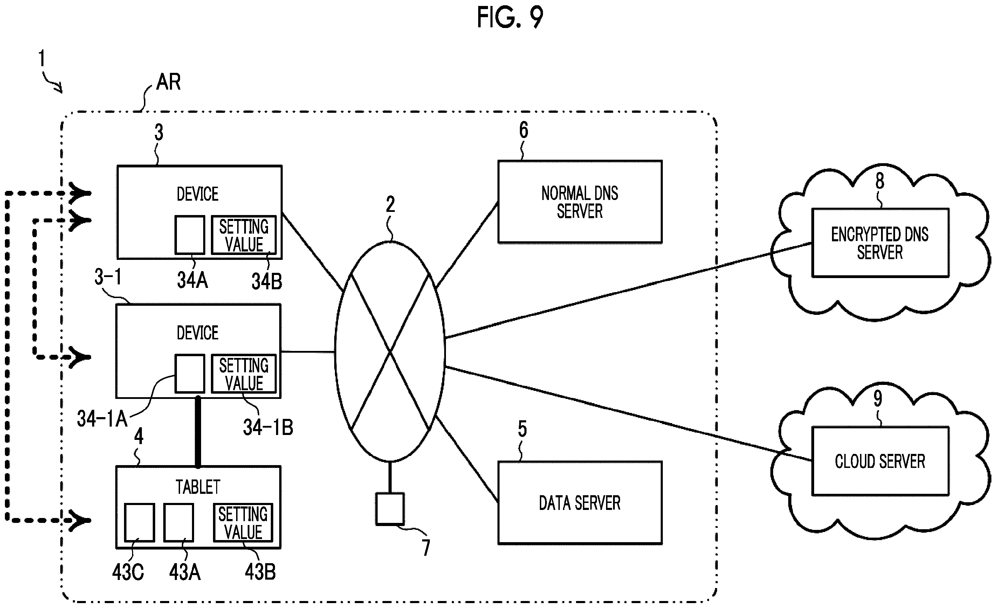

Fig. 9 is a conceptual diagram showing a flow of information in a case in which printing by the device 3-1 adjacent to the device 3 is designated from the tablet 4. That is, the tablet 4 executes an instruction to print the data (MF 1. CORP. INTERNAL/B OX 1: FILE 1) accumulated in the device 3 with the device 3-1 adjacent to the device 3.

Here, it is assumed that the following information is set.
Device 3: (IP address) 192.168.0.10
Device 3: (domain) MF1.CORP.INTERNAL
Accumulated data: MF 1. CORP. INTERNAL/BOX 1 :FILE 1
Device 3-1: (IP address) 192.168.0.11
Device 3-1: (domain) MF2.CORP.INTERNAL
Tablet 4: (IP address) 192.168.128.1
Tablet 4: (domain) MF1-UI.CORP.INTERNAL
Print instruction: print data/accumulated data, printing destination/device 3-1

In a case where a print instruction is issued from the tablet 4 to a device adjacent to the predetermined device, first, the tablet 4 specifies the adjacent device 3-1. Specifically, as represented by a solid line in Fig. 9, the tablet 4 reads a two-dimensional code formed to acquire, for example, an IP address of the adjacent device 3-1 (that is, which is stored in an IP region 34-1A) or acquires the two-dimensional code using short-range communication to specify the adjacent device 3-1.

Then, the tablet 4 determines whether or not the predetermined device 3, which is the connection destination, and the specified adjacent device 3-1 are located in the internal area AR. Here, in a case where communication with the predetermined device 3 is successful and short-range communication with the adjacent device 3-1 is also successful, the tablet 4 determines that both the predetermined device 3 and the adjacent device 3-1 are located in the internal area AR. Then, since the connection destination is in the internal area AR, the network information of the tablet 4 is set as information for performing address resolution using the normal DNS server 6. That is, the device settings are to use the normal DNS.

Specifically, as represented by a solid line in Fig. 9, the tablet 4 specifies the adjacent device 3-1 and determines that both devices are located in the internal area AR. Then, as represented by a dotted line in the Fig. 9, the tablet 4 instructs the device 3 to issue an instruction to print the accumulated print file to the adjacent device 3-1, using the address resolution by the normal DNS server 6. The adjacent device 3-1 receives the instruction from the device 3 and prints the print file.

Next, a case where the tablet 4 issues a print instruction in a state in which the tablet 4 is attached to the predetermined device (that is, the device 3) will be described.

In a case where the tablet 4 is attached to the device 3, the determination result in Step S106 shown in Fig. 6 is "No", the tablet 4 is in the tablet state SB in the network system 1, and the CPU 40A advances the process to Step S140.

In Step S140, in the determination unit 410, the CPU 40A specifies a process in the attached state of the tablet 4 as in Step S108. The specification of the process includes specification of a device that executes the job and specification of a communication path in a case where the job is executed.

Then, in Step S142, the CPU 40A executes the process according to the settings of the device 3 which is the predetermined device. That is, the tablet 4 instructs the device 3 to execute the job and ends the present processing routine.

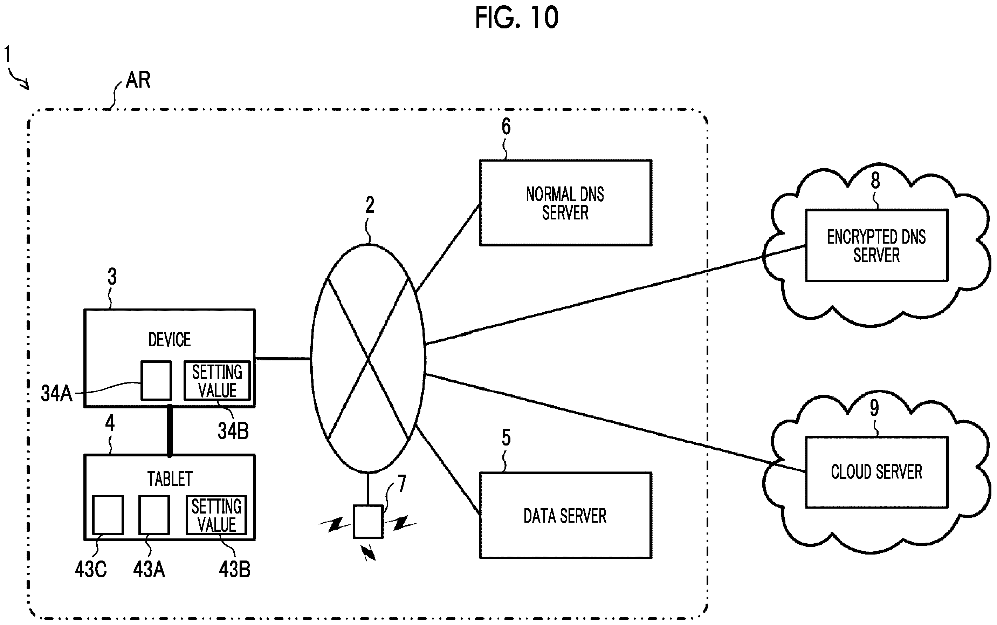

Fig. 10 is a conceptual diagram showing a flow of information in a case where a print instruction is issued in a state in which the tablet 4 is attached to the device 3.

In a case where the tablet 4 is connected to the device 3 without being detached from the device 3 as represented by a solid line in Fig. 10, the communication between the tablet 4 and the device 3 is not communication using the DNS. Therefore, encryption between the tablet 4 and the device 3 may not be particularly considered. That is, the tablet 4 only communicates with the device 3, and communication with the outside of the device 3 and the tablet 4 is based on the device. Therefore, the communication may be performed following the network settings of the device 3. For example, in a case of the domain in the internal area AR, the device settings may be to use the normal DNS server 6. On the other hand, in a case where the cloud server 9 or the like outside the internal area AR is used, the device settings may be to use the encrypted DNS server 8.

Next, a case where a print instruction is issued in a state in which the tablet 4 is detached from the device 3 and is located outside the internal area AR will be described.

In addition, here, it is assumed that, since the determination of the communication path outside the internal area AR is included, the DNS is disposed outside the internal area AR, for example, on the cloud side, and the fully qualified domain name (FQDN) of the device can be resolved. Further, it is assumed that a service has been established that assigns a domain outside the internal area AR with a canonical name (CNAME) and can perform address resolution via the encrypted DNS.

As shown in Fig. 6, in a case where the tablet 4 is located outside the internal area AR in a state in which the tablet 4 is detached from the device 3, the determination result in Step S112 is "No", the tablet 4 is in the tablet state SC in the network system 1, and the CPU 40A advances the process to Step S150.

In Step S150, the CPU 40A executes address resolution. Specifically, the tablet 4 determines whether or not the tablet 4 can be connected with the IP address of the device 3 before detachment. In a case where the connection fails, the tablet 4 is in a state in which the tablet 4 is located outside the internal area AR. In addition, in a case where the normal DNS server 6 is designated by the private address, the tablet 4 requests the IP address of the device 3. In a case where the IP address as a response includes the private address and the global address, the tablet 4 performs connection using the private address. In a case where the connection fails, the tablet 4 is in a state in which the tablet 4 is located outside the internal area AR. Then, in a case where the tablet 4 is located outside the internal area AR, the encrypted DNS server 8 is used as the network settings of the tablet 4 to perform address resolution for connection to the device 3.

In Step S152, the CPU 40A requests the device 3 to execute the process. Specifically, the tablet 4 is connected to the normal DNS server 6 that can perform address resolution using the encrypted DNS server 8 and acquires the IP address of the device 3 that can perform external communication. The tablet 4 instructs the device 3 to acquire and print a file. That is, the tablet 4 instructs the device 3 to execute the job and ends the present processing routine. Then, the device 3 can resolve the address of the connection destination using the normal DNS server 6 as the device settings on the basis of the received IP address and instruction and can acquire and print the file.

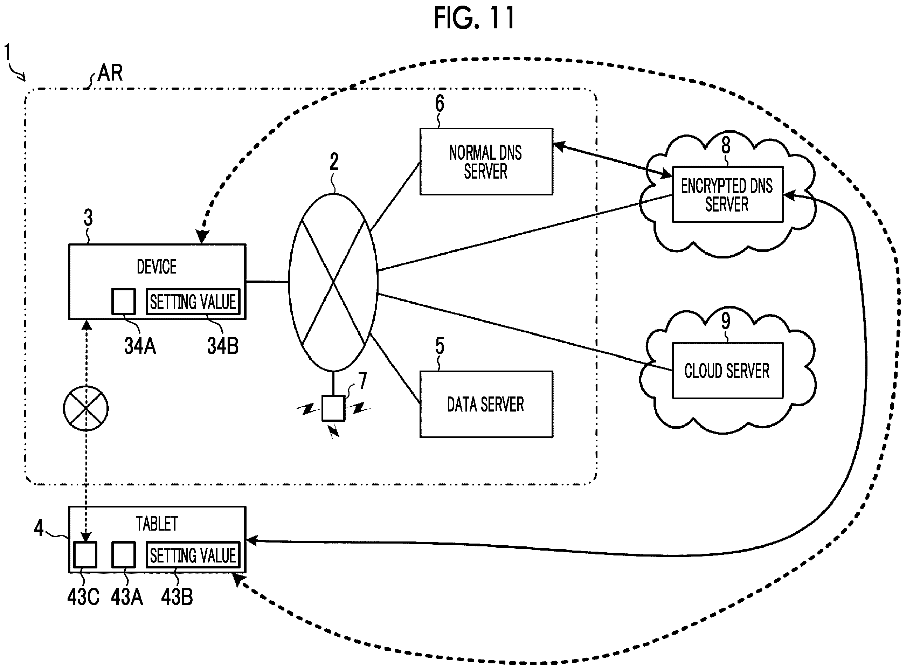

Fig. 11 is a conceptual diagram showing a flow of information in a case where printing by the device 3 is designated from the tablet 4 that has been detached from the device 3 and located outside the internal area AR.

Here, a case will be described in which the printing of the data accumulated in the data server 5 in the internal area AR by the device 3, from which the tablet 4 has been detached, is designated from the tablet 4 carried out of the internal area AR. In this case, from the determination for the internal area AR, the tablet 4 performs address resolution using the encrypted DNS server 8 as the network settings to be connected to the device 3, and the device 3 performs address resolution using the normal DNS server as the device settings to be connected to the data server 5 in the internal area AR.

Here, it is assumed that the following information is set.
Device 3: (IP address) 192.168.0.10
Device 3: (domain) MF1.CORP.LOCAL
Device 3: (external domain) MF1.CORP.CONTOSO.COM
Tablet 4: (IP address) 192.168.128.1
Tablet 4: (domain) MF1-UI.CORP.LOCAL
Data server 5: (IP address) 192.168.64.100
Data server 5: (domain) NAS.CORP.LOCAL
Print file: ¥¥NAS.CORP.LOCAL¥BROCHURE001
Normal DNS server 6: (IP address) 192.168.0.1
Normal DNS server 6: (domain) CORP.LOCAL
Encrypted DNS server 8: (IP address) xxx.xxx.xxx.xxx<global IP address>
Encrypted DNS server 8: (domain) ANGO.COM
Print instruction: print file, printing destination/device 3

In a case where the user detaches the tablet 4 attached to the device 3 and takes the tablet 4 outside the internal area AR of the company or the like, the user sets the network settings in the tablet 4 in order to use the tablet 4 outside the internal area AR via the network. The network settings are set in the setting value region 43B of the setting memory 43. That is, in a case where the user wants to perform printing outside the internal area AR, network information, such as wireless settings for network connection, is set in the tablet 4 in order to use the network outside the internal area AR. In addition, the tablet 4 acquires information (¥¥NAS.CORP.LOCAL¥BROCHURE001) indicating the print file, which has been stored in the data server 5 and designated by the user, for a print instruction (S100).

As represented by a dotted line between the device 3 and the tablet 4 in Fig. 11, the tablet 4 performs connection check using the IP address of the device 3 stored in the device IP region 43C to determine whether or not the tablet 4 is located in the internal area AR (S112). In a case where the tablet 4 is located outside the internal area AR, the connection check fails. Therefore, the tablet 4 sets the encrypted DNS server 8 as the network settings and performs address resolution for connection to the device 3 using the encrypted DNS server 8 (S150).

Specifically, the address of the device 3 is resolved by inquiring the address of the device 3 of the encrypted DNS server 8 in order to obtain the network settings of the tablet 4 using data (MF1.CORP.CONSOTO.COM) as the external domain of the device 3 for access from the outside of the internal area AR. The encrypted DNS server 8 is connected to the normal DNS server 6 that can resolve the address of the domain (CORP.CONSOTO.COM) and acquires the address that enables the device 3 to communicate with the outside, in response to the inquiry about the domain (CORP.CONSOTO.COM). Since the tablet 4 is outside the internal area AR, the tablet 4 instructs the device 3 to acquire and print the print file (¥¥NAS.CORP.LOCAL¥BROCHURE001). The device 3 resolves the address of the domain (NAS.CORP.LOCAL) using the normal DNS server 6 as the device settings and acquires and prints the print file, on the basis of the address and the print instruction received from the tablet 4.

In the example shown in Fig. 11, the accumulated data of the data server 5 is used as the print file. However, the same process can be performed in a case where the data accumulated in the device 3 is accumulated in the cloud server 9 by the tablet 4 outside the internal area AR. That is, address resolution may be performed using the encrypted DNS server 8 as the network settings of the tablet 4 for connection, and the use of the encrypted DNS server 8 as the network settings of the tablet 4 may also be set for the connection of the tablet 4 to the cloud server 9.

For example, it is assumed that the user performs an operation of displaying a file list in a box BOX for data storage provided in the device 3, displaying the content of the designated file on the tablet 4, and storing the selected file in the cloud server 9. In this case, as in the process shown in Fig. 8, the address resolution of the device 3 is executed, and the file list in the box BOX in the device 3 is acquired. Then, the content of the file acquired by the tablet 4 is displayed to be selectable. Then, in order to store the selected file in the cloud server 9, the tablet 4 may be set to resolve the address of the cloud server 9 using the encrypted DNS server 8 as the network settings of the tablet 4.

In addition, even in a case where the tablet 4 only displays data and issues an instruction to transmit the data from the device 3 to the cloud server 9, it is possible to perform the process in the same manner as described above. That is, since the communication is external communication from the device 3 to the cloud server 9, the use of the encrypted DNS server as the network settings of the device 3 may be set. Specifically, in a case where the file is stored in the cloud server 9, instead of executing the transmission of the file from the tablet 4, an instruction to transmit the file from the device 3 to the cloud server 9 may be issued.

In addition, the CPU 40A may communicate with the DHCP server (not shown) to acquire the server address of the normal DNS server 6 or the like.

As described above, it is possible to improve the responsiveness of communication and security, as compared to a case where the communication path is designated and switched according to the information to be communicated.

### <Second Exemplary Embodiment>

Next, a second exemplary embodiment of the present disclosure will be described. In the second exemplary embodiment, the technology of the present disclosure is applied to a user terminal, such as a mobile phone or a tablet terminal, that can be individually used, instead of the tablet 4 attachable to and detachable from the device 3, such as a multifunction machine, which is applied in the first exemplary embodiment. Since the second exemplary embodiment has the same configuration as the first exemplary embodiment, the identical portions are denoted by the identical reference numerals, and a detailed description thereof will be omitted.

The user terminal, such as a mobile phone or a tablet terminal, that can be used individually is not used to operate the device 3, but includes a mechanism that enables communication using a telephone line or network communication using wireless or wired connection. Therefore, in a case where the technology of the present disclosure is applied to the user terminal, the user terminal may be set in advance to operate in the same manner as the tablet 4.

In the second exemplary embodiment, the user terminal according to the second exemplary embodiment will be described as a user terminal 4-UI. In addition, since the user terminal 4-UI has the same configuration as the tablet 4 shown in Fig. 3, a detailed description of the user terminal 4-UI will be omitted. Hereinafter, letters "-UI" are added to each configuration of the tablet 4, and each configuration of the tablet 4 will be described as a configuration of the user terminal 4-UI. In addition, in a case where each of the above-described configurations is described as a configuration to which the user terminal 4-UI is applied, letters "-UI" are added to each configuration, and each configuration will be described.

The user terminal 4-UI according to the present exemplary embodiment is an example of the terminal according to the exemplary embodiment of the present disclosure.

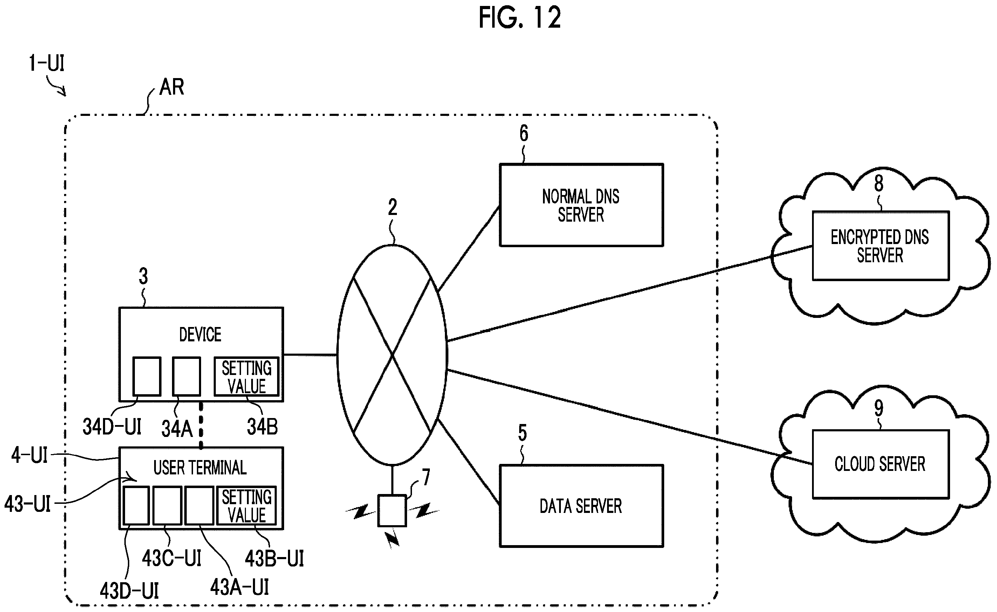

Fig. 12 is a diagram showing an example of a configuration of a network system 1-UI according to the present exemplary embodiment, which is the same as the configuration of the network system 1 shown in Fig. 1. The network system 1-UI shown in Fig. 12 is different from the network system 1 shown in Fig. 1 in that the user terminal 4-UI replaces the tablet 4 shown in Fig. 1.

As shown in Fig. 12, in the network system 1-UI, the user terminal 4-UI is configured to be attachable to and detachable from the device 3. For example, the device 3 and the user terminal 4-UI are set to be attached to each other by direct connection, such as wired connection or connection between both devices using short-range wireless communication, and to be detached from each other in a case where the direct connection is released. In Fig. 12, the attachable and detachable state is represented by a dotted line. The user terminal 4-UI operates as a UI panel that operates the device 3 in a state in which the user terminal 4-UI is attached to the device 3.

A storage region for storing network setting information used in network communication, such as an IP address in the network environment, is set in the user terminal 4-UI in order to specify each of the devices included in the network system 1-UI and to transmit and receive information, and the user terminal 4-UI is set in the same manner as in the above-described exemplary embodiment.

Specifically, a setting memory 43-UI is assigned to a memory (not shown) or the auxiliary storage device 45 in the user terminal 4-UI. The setting memory 43-UI is provided with an IP region 43A-UI and a setting value region 43B-UI and stores network setting information including at least an IP address unique to the user terminal 4-UI and setting values. In addition, a device IP region 43C-UI for storing the IP address of the device 3, to which the user terminal 4-UI is attached, is also assigned to the setting memory 43-UI.

Further, in the present exemplary embodiment, a storage region 43D-UI is also assigned to the setting memory 43-UI. The storage region 43D-UI is a storage region that stores information indicating that the user terminal 4-UI is registered as the UI unit 32 of the device 3. For example, identification information unique to the device 3 is stored in the storage region 43D-UI. In addition, it is assumed that a storage region 34D-UI is set in the setting memory 34 of the device 3. The storage region 34D-UI is a storage region of the device 3 that stores information indicating that the user terminal 4-UI is registered as the UI unit 32 of the device 3, similarly to the storage region 43D-UI. For example, identification information unique to the user terminal 4-UI, such as a mac address, is stored in the storage region 34D-UI.

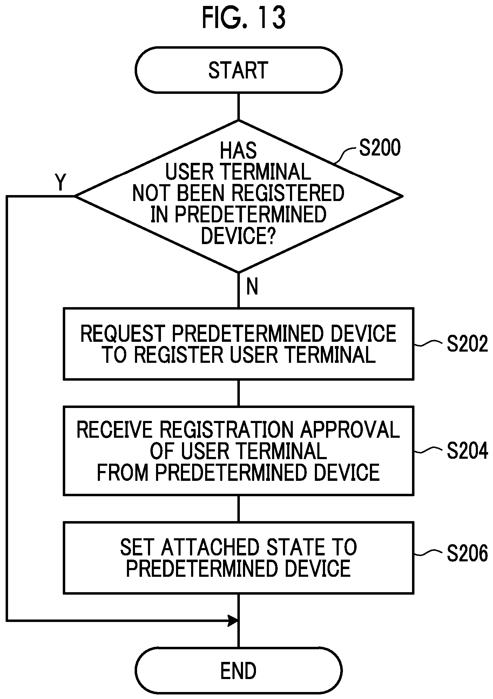

Fig. 13 is a flowchart showing an example of a flow of a process of registering the user terminal 4-UI as the tablet 4 in the device 3. The process shown in Fig. 13 is executed by the CPU 40A of the user terminal 4-UI.

In the user terminal 4-UI, in a case where the CPU 40A receives a request to register the user terminal 4-UI as the UI unit 32 of the device 3 in response to an instruction from the user, the CPU 40A executes each of the following steps.

In Step S200, the CPU 40A determines whether or not the identification information has not been stored in the storage region 34D-UI to determine whether or not the user terminal 4-UI has not been registered in the device 3 as the predetermined device. That is, in Step S200, the CPU 40A determines whether or not the user terminal 4-UI has been registered as the same configuration as the tablet 4. In a case where the user terminal 4-UI has been registered, the determination result in Step S200 is "No", and the CPU 40A ends the present processing routine. On the other hand, in a case where the user terminal 4-UI has not been registered, the determination result in Step S200 is "Yes", and the process proceeds to Step S202.

In Step S202, the CPU 40A transmits information indicating the request to register the user terminal 4-UI as the UI unit 32 to the device 3. The information to be transmitted includes, for example, identification information unique to the user terminal 4-UI such as a mac address. The device 3 receives the request from the user terminal 4-UI, stores the identification information of the user terminal 4-UI in the storage region 34D-UI, and returns information indicating registration approval indicating that the user terminal 4-UI has been registered to the user terminal 4-UI. The information indicating the registration approval to be returned from the device 3 to the user terminal 4-UI includes identification information unique to the device 3.

In Step S204, the CPU 40Areceives the information indicating the registration approval from the device 3 and stores the identification information unique to the device 3 in the storage region 43D-UI. Therefore, the device 3 and the user terminal 4-UI can directly communicate with each other. Then, in Step S206, the CPU 40A sets the state of the user terminal 4-UI as the state in which the user terminal 4-UI is attached to the device 3 and ends the present processing routine.

As described above, since the user terminal 4-UI is registered in the device 3, the user terminal 4-UI can be applied as a terminal that operates in the same manner as the tablet 4.

### [Other Forms]

In the above-described exemplary embodiments, a case where printing is executed with the print data as the execution of the job has been described. However, the technology of the present disclosure is not limited to the execution of the process related to printing as the execution of the job. For example, the technology of the present disclosure may be applied to a scanning process that reads an image and stores the image.

The technology of the present disclosure has been described in detail above with reference to specific exemplary embodiments. However, the technology of the present disclosure is not limited to the exemplary embodiments and can include various other exemplary embodiments within the scope of the technology of the present disclosure.

In addition, in the above-described exemplary embodiments, the processes performed by executing the program have been described. However, the processes of the program may be implemented by hardware. Further, for example, some of the processes of the program may be implemented by a hardware configuration or may be implemented by a combination of the hardware configuration and the software configuration. Furthermore, the exemplary embodiment may be in a form of a computer-readable storage medium, such as an optical disk, that stores the above-described program.

In addition, the configuration of the system described in the exemplary embodiments is an example and may be changed depending on the situation without departing from the gist. Further, the flow of the process of the program described in the exemplary embodiments is also an example, and unnecessary steps may be deleted, new steps may be added, or the processing order may be changed without departing from the scope.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The above-described exemplary embodiments include the following technologies.
(((1))) An information processing system comprising:
   a processor; and
   a memory,
   wherein the processor is configured to:
      in a case where a terminal transmits a request to execute a job to a device that the terminal is attachable to and detachable from, in a state in which the terminal is attached to the device and the device and the terminal are connected to each other, control the terminal such that the terminal requests the device to execute the job indicating that communication is performed using first network setting information set in the device; and
      in a state in which the terminal is detached from the device and the device and the terminal are disconnected from each other, control the terminal on a basis of the job such that the terminal requests the device to execute the job indicating that communication is performed using second network setting information that is stored in the memory, is different from the first network setting information, and includes network settings related to communication corresponding to a security level of each of a plurality of networks having different security levels.
(((2))) The information processing system according to (((1))), wherein the processor is configured to:
   set, as the second network setting information, network setting information corresponding to a security level of a communication path in a case where communication is performed by the execution of the job.
(((3))) The information processing system according to (((2))), wherein the processor is configured to:
   set, as the second network setting information, network setting information including network settings corresponding to a security level related to a communication path to a communication destination on a basis of information indicating the communication path to the communication destination in the job.
(((4))) The information processing system according to (((3))), wherein the processor is configured to:
   in a case where a security level of the information indicating the communication path to the communication destination is lower than a predetermined security level, set information indicating that a predetermined encryption process is performed for communication as the second network setting information.
(((5))) The information processing system according to any one of (((1))) to (((4))),
   wherein position information indicating a position of a predetermined device on a network is stored in the memory in advance, and
   the processor is configured to:
      determine whether a state between the device and the terminal is the connected state or the disconnected state on a basis of a communication result in a case where communication is performed using the position information.
(((6))) The information processing system according to (((5))), wherein the processor is configured to:
   store the position information in the memory in a case where the terminal is detached from the device.
(((7))) The information processing system according to (((6))), wherein the processor is configured to:
   store, in the memory, position information (IP) indicating a position of the device on the network, which has been acquired from the device, in the connected state and determine whether the state between the device and the terminal is the connected state or the disconnected state on a basis of the stored position information.
(((8))) The information processing system according to (((7))), wherein the processor is configured to:
   determine whether the state between the device and the terminal is the connected state or the disconnected state on a basis of a communication result of direct communication between the terminal and the device.
(((9))) The information processing system according to (((8))), wherein the processor is configured to:
   determine that the state is the connected state in a case where the direct communication is successful; and
   determine that the state is the disconnected state in a case where the direct communication is unsuccessful.
(((10))) A program that causes a processor to execute information processing, the program causing the processor to execute a process comprising:
   in a case where a terminal transmits a request to execute a job to a device that the terminal is attachable to and detachable from, in a state in which the terminal is attached to the device and the device and the terminal are connected to each other, controlling the terminal such that the terminal requests the device to execute the job indicating that communication is performed using first network setting information set in the device; and
   in a state in which the terminal is detached from the device and the device and the terminal are disconnected from each other, controlling the terminal on a basis of the job such that the terminal requests the device to execute the job indicating that communication is performed using second network setting information that is stored in a memory, is different from the first network setting information, and includes network settings related to communication corresponding to a security level of each of a plurality of networks having different security levels.

The effects of the above technologies are as follows.

According to the (((1))) and (((10))) of the present disclosure, it is possible to improve a responsiveness of communication and a security compared to a case where communication is performed using network setting information set in a terminal.

According to the (((2))) of the present disclosure, it is possible to improve the responsiveness of communication and the security for each job compared to a case where the security level in communication for executing a job is not taken into consideration.

According to the (((3))) and (((4))) of the present disclosure, it is possible to improve the responsiveness of communication and the security compared to a case where the security level of the communication path to the communication destination in the job is not taken into consideration.

According to the (((5))) of the present disclosure, it is possible to specify the connection state of a device that the terminal is attachable to and detachable from, compared to a case where communication is performed without taking into account the position of the device.

According to the (((6))) of the present disclosure, it is possible to store position information fewer times compared to a case where position information is stored multiple times in a state where the terminal is attached to the device.

According to the (((7))) of the present disclosure, a processing load related to the determination can be reduced compared to determining the states of the device and the terminal regardless of the location of the device on the network.

According to (((8))) and (((9))) of the present disclosure, the processing load relating to the determination can be reduced compared to a case where the determination is made without taking into account the type of communication between the terminal and the device.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: network system
2: internal network
3: device
4: tablet
5: data Server
6: server
7: access point
8: encrypted DNS server
9: cloud server
31: communication unit
31A: short-range communication unit
34: setting memory
34A: IP region
34B: setting value region
34D: storage region
35P: program
41: communication unit
41A: short-range communication unit
43: setting memory
43A: IP region
43B: setting value region
43C: device IP region
43D: storage region
45P: program
400: acquisition unit
410: determination unit
420: setting unit
430: control unit
AR: internal area

## Claims

1. An information processing system comprising:
a processor; and
a memory,
wherein the processor is configured to:
in a case where a terminal transmits a request to execute a job to a device that the terminal is attachable to and detachable from, in a state in which the terminal is attached to the device and the device and the terminal are connected to each other, control the terminal such that the terminal requests the device to execute the job indicating that communication is performed using first network setting information set in the device; and
in a state in which the terminal is detached from the device and the device and the terminal are disconnected from each other, control the terminal on a basis of the job such that the terminal requests the device to execute the job indicating that communication is performed using second network setting information that is stored in the memory, is different from the first network setting information, and includes network settings related to communication corresponding to a security level of each of a plurality of networks having different security levels.

2. The information processing system according to claim 1, wherein the processor is configured to:
set, as the second network setting information, network setting information corresponding to a security level of a communication path in a case where communication is performed by the execution of the job.

3. The information processing system according to claim 2, wherein the processor is configured to:
set, as the second network setting information, network setting information including network settings corresponding to a security level related to a communication path to a communication destination on a basis of information indicating the communication path to the communication destination in the job.

4. The information processing system according to claim 3, wherein the processor is configured to:
in a case where a security level of the information indicating the communication path to the communication destination is lower than a predetermined security level, set information indicating that a predetermined encryption process is performed for communication as the second network setting information.

5. The information processing system according to any one of claims 1 to 4,
wherein position information indicating a position of a predetermined device on a network is stored in the memory in advance, and
the processor is configured to:
determine whether a state between the device and the terminal is the connected state or the disconnected state on a basis of a communication result in a case where communication is performed using the position information.

6. The information processing system according to claim 5, wherein the processor is configured to:
store the position information in the memory in a case where the terminal is detached from the device.

7. The information processing system according to claim 6, wherein the processor is configured to:
store, in the memory, position information indicating a position of the device on the network, which has been acquired from the device, in the connected state and determine whether the state between the device and the terminal is the connected state or the disconnected state on a basis of the stored position information.

8. The information processing system according to claim 7, wherein the processor is configured to:
determine whether the state between the device and the terminal is the connected state or the disconnected state on a basis of a communication result of direct communication between the terminal and the device.

9. The information processing system according to claim 8, wherein the processor is configured to:
determine that the state is the connected state in a case where the direct communication is successful; and
determine that the state is the disconnected state in a case where the direct communication is unsuccessful.

10. A program that causes a processor to execute information processing, the program causing the processor to execute a process comprising:
in a case where a terminal transmits a request to execute a job to a device that the terminal is attachable to and detachable from, in a state in which the terminal is attached to the device and the device and the terminal are connected to each other, controlling the terminal such that the terminal requests the device to execute the job indicating that communication is performed using first network setting information set in the device; and
in a state in which the terminal is detached from the device and the device and the terminal are disconnected from each other, controlling the terminal on a basis of the job such that the terminal requests the device to execute the job indicating that communication is performed using second network setting information that is stored in a memory, is different from the first network setting information, and includes network settings related to communication corresponding to a security level of each of a plurality of networks having different security levels.

11. An information processing method comprising:
in a case where a terminal transmits a request to execute a job to a device that the terminal is attachable to and detachable from, in a state in which the terminal is attached to the device and the device and the terminal are connected to each other, controlling the terminal such that the terminal requests the device to execute the job indicating that communication is performed using first network setting information set in the device; and
in a state in which the terminal is detached from the device and the device and the terminal are disconnected from each other, controlling the terminal on a basis of the job such that the terminal requests the device to execute the job indicating that communication is performed using second network setting information that is stored in a memory, is different from the first network setting information, and includes network settings related to communication corresponding to a security level of each of a plurality of networks having different security levels.
